# EUROPEAN PATENT SPECIFICATION

(11) **EP 2 743 027 B1**
(45) Date of publication and mention of the grant of the patent: **22.09.2021**
(21) Application number: 12832308.6
(22) Date of filing: 24.05.2012
(51) Int. Cl.: B23K 37/00, F28F 21/08, F16J 3/04

(54) **COOLING RING FOR WELDING BELLOWS GENERATING LESS METAL POWDER**
KÜHLRING ZUM SCHWEISSEN VON BALGEN MIT WENIGER METALLPULVERERZEUGUNG
ANNEAU DE REFROIDISSEMENT UTILISÉ POUR SOUDER UN SOUFFLET AVEC UNE MOINDRE PRODUCTION DE POUDRE MÉTALLIQUE

(30) Priority: 16.09.2011 KR 20110093651; 23.05.2012 KR 20120054945
(43) Date of publication of application: 18.06.2014
(73) Proprietor: Ksm Co., Ltd., Gimpo-si, Gyeonggi-do 415-855 (KR)
(72) Inventor: KIM, Yun Ho, Seoul 140-763 (KR)
(74) Representative: Ahner, Philippe
(86) International application number: PCT/KR2012/004108
(87) International publication number: WO 2013/039289

(56) References cited:
- GB-A- 722 070
- JP-A- 2001 193 837
- JP-A- 2006 222 031
- JP-A- 2006 231 342
- JP-B2- H0 655 347
- JP-B2- H0 743 035
- US-A- 4 368 372
- US-A- 6 078 021

## Description

### TECHNICAL FIELD

The present invention relates to the use of a cooling ring for welding a bellows according to the preamble of claim 1 (see, for example, US 6,078,021).

### BACKGROUND ART

Bellows are wrinkled tubes capable of maintaining a gastight seal and simultaneously with stretching, which are generally used in vacuum devices, semiconductor manufacturing equipment, small industrial machines, and precision machinery.

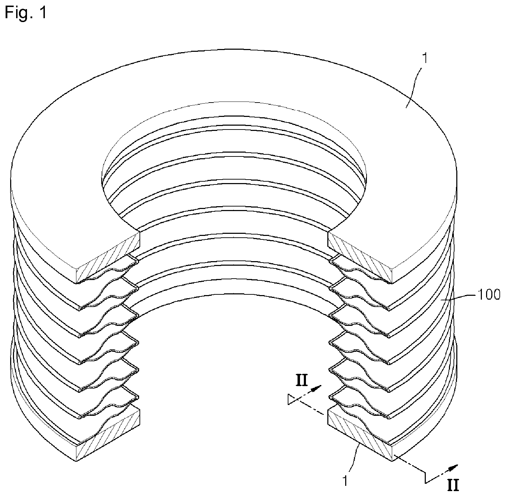

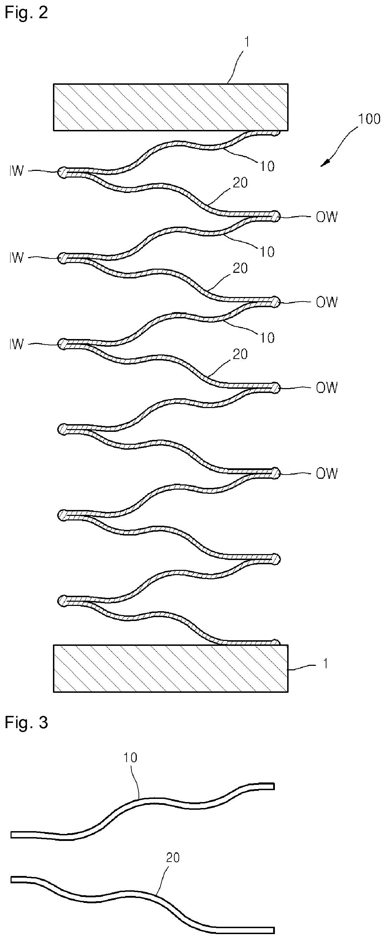

FIGS. 1 and 2 illustrate an example of a bellows 100. The bellows 100 is used while both ends thereof are being coupled with flanges 1. A plurality of pairs of barriers 10 and 20 are arranged in a line in which a first barrier 10 and a second barrier 20 disposed to face the first barrier 10 form one pair thereof and the first barriers 10 and the second barriers 20, adjacent to each other are alternately connected to have the shape of a wrinkled tube.

To describe a method of manufacturing the bellows 100 in detail, as shown in FIG. 3, the first barrier 10 and the second barrier 20 are manufactured by pressing respective metallic sheets, as shown in FIG. 4, an inner circumferential surface welding part IW is formed by welding inner ends of the first barrier 10 and the second barrier to one another, as shown in FIG. 5, the plurality of pairs of barriers 10 and 20 welded by the inner circumferential surface welding parts IW are arranged in one line, and as shown in FIG. 6, an outer circumferential surface welding part OW is formed by welding outer ends of the first barrier 10 and the second barrier 20 of mutually adjacent pairs to one another.

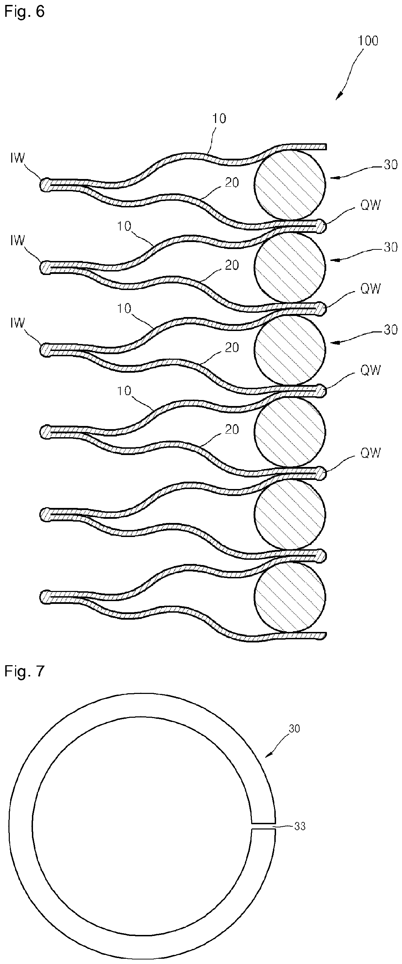

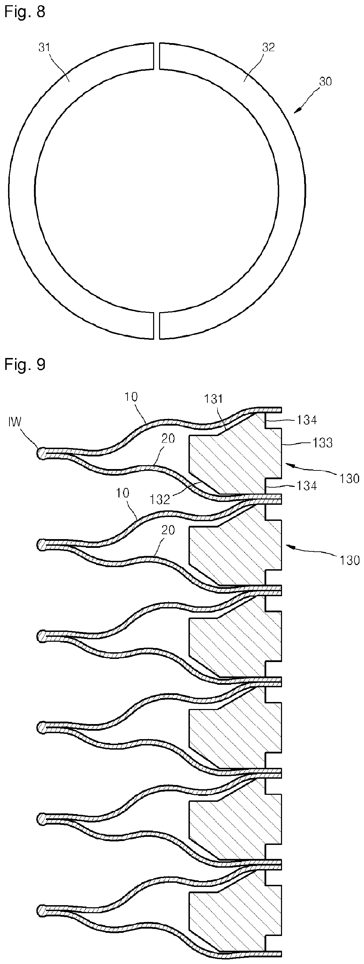

In this case, to form the outer circumferential surface welding part OW, there are used cooling rings 30 and 130 for welding a bellows, formed of respective metallic materials, whose planar shapes are shown in FIGS. 7 and 8 and cross-sectional shapes are shown in FIGS. 6 and 9.

The cooling rings 30 and 130 are inserted between outer ends of the first barrier 10 and the second barrier 20 of each of the pairs to maintain a distance between the outer ends of the first barrier 10 and the second barrier 20 to be uniform in such a way that the first barrier 10 and the second barrier 20 are attached and clamped closely to each other while rapidly dissipating welding heat generated when forming the outer circumferential surface part OW.

However, since the typical cooling rings 30 and 130 are formed of a soft metal such as copper, a copper alloy, aluminum, gold, and silver, metallic powder such as minute copper powder or aluminum powder are left on an outer circumferential surface of the bellows 100 after using the cooling rings 30 and 130. Since such metallic powder has high electrical conductivity, when the bellows 100 is used for a semiconductor device, a defect is caused by an electrical short-circuit due to the metallic powder in a semiconductor manufacturing process.

Accordingly, when using the cooling rings 30 and 130, before mounting the bellows 100 on a semiconductor device, it is necessary to remove metallic powder such as copper powder left on the outer circumferential surface of the bellows 100. Particularly, since the copper powder is very chemically stable and has high adsorption due to properties of copper, it is not easily removed from a surface of the bellows 100 by spraying high pressure gas or chemically cleaning. Accordingly, it is necessary to manually remove residual copper powder on the outer circumferential surface of the bellows 100 one by one by a worker.

### DETAILED DESCRIPTION OF THE INVENTION

### TECHNICAL PROBLEM

The present invention provides the use of a cooling ring for welding a bellows, whose configuration is improved not to generate powder of a metal having high electrical conductivity, such as copper, aluminum, gold, and silver, during a welding process.

### TECHNICAL SOLUTION

According to the invention as defined in claim 1, a use of a cooling ring for welding used to manufacture a bellows is disclosed.

### ADVANTAGEOUS EFFECTS

It is possible to prevent powder of a metal having high electrical conductivity, such as copper, aluminum, gold, and silver, during a welding process.

### DESCRIPTION OF THE DRAWINGS

FIG. 1 is a cross-sectional perspective view illustrating a general bellows;
FIG. 2 is a cross-sectional view illustrating the bellows shown in FIG. 1, cut along a line II-II;
FIG. 3 is a cross-sectional view illustrating a state in which a first barrier and a second barrier manufactured by pressing respective metallic sheets are arranged to face each other;

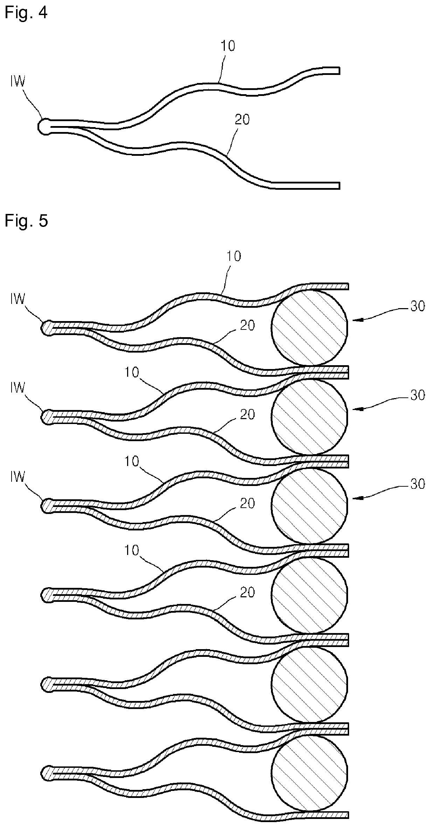

FIG. 4 is a cross-sectional view illustrating a state in which inner ends of a pair of the first barrier and the second barrier shown in FIG. 3 are welded to each other to form an inner circumferential surface welding part;
FIG. 5 is a cross-sectional view illustrating a state in which, when a plurality of pairs of barriers welded at inner circumferential surface welding parts are arranged in a line, cooling rings according to an example not forming part of the present invention for welding a bellows are inserted between outer ends of the first barriers and second barriers of the respective pairs thereof;
FIG. 6 is a cross-sectional view illustrating a state in which outer ends of a mutually adjacent pair of the first barrier and the second barrier are welded to each other to form outer circumferential surface welding parts;

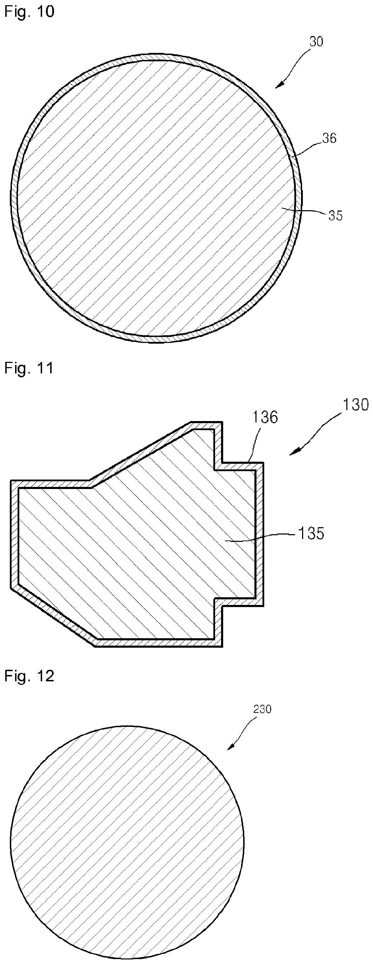

FIG. 7 is a top view illustrating an example of the cooling ring shown in FIG. 10;
FIG. 8 is a top view illustrating another example of the cooling ring shown in FIG. 10;
FIG. 9 is a cross-sectional view illustrating a state in which outer ends of a mutually adjacent pair of the first barrier and the second barrier are welded to each other to form outer circumferential surface welding parts, using cooling rings according to an example not forming part of the present invention for welding a bellows, which has another cross-sectional shape in addition to a circular shape;
FIG. 10 is a cross-sectional view illustrating a cooling ring for welding a bellows according to the present invention;
FIG. 11 is a cross-sectional view illustrating a cooling ring for welding a bellows according to an example not forming part of the present invention;
FIG. 12 is a cross-sectional view illustrating a cooling ring for welding a bellows according to an example not forming part of the present invention;

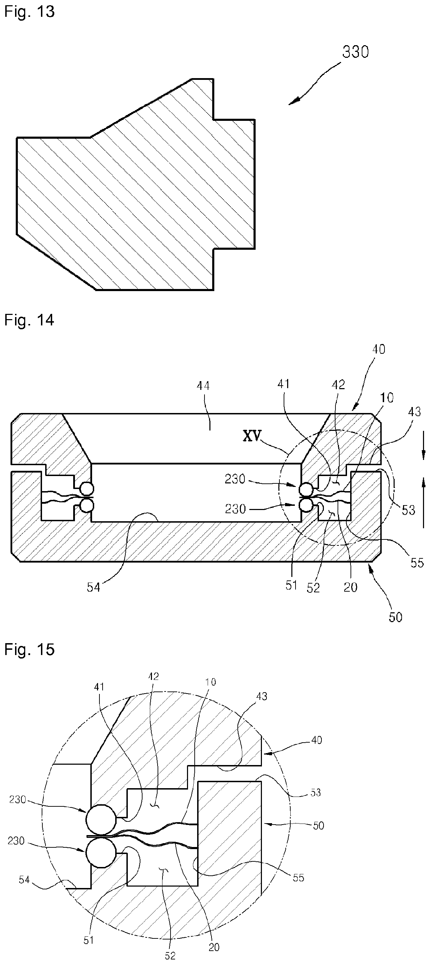

FIG. 13 is a cross-sectional view illustrating a cooling ring for welding a bellows according to an example not forming part of the present invention;
FIG. 14 is a view illustrating a state in which inner ends of a pair of the first barrier and a second barrier are welded to each other by using the cooling rings shown in FIG. 12;
FIG. 15 is a partially enlarged view illustrating a circled portion XV of the cooling rings shown in FIG. 14; and

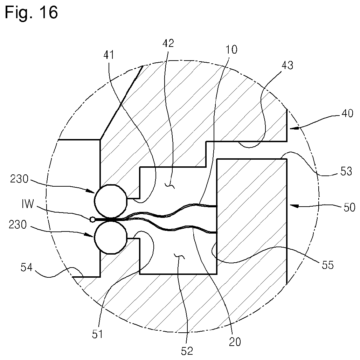

FIG. 16 is a view illustrating a state in which an inner circumferential surface welding part is formed on the inner ends of the pair of the first barrier and the second barrier welded to each other by using the cooling rings shown in FIG. 15.

### BEST MODE

Hereinafter, the present invention will be described in detail with reference to the attached drawings.

FIG. 7 is a top view illustrating a cooling ring 30 according to the present invention for welding a bellows and FIG. 10 is a cross-sectional view illustrating the cooling ring 30.

Referring to FIGS. 7 and 10, the cooling ring 30 is used for manufacturing a bellows 100 and is, as shown in FIG. 1, inserted into an interval between a first barrier 10 and a second barrier 20 in order to attach the first barrier 10 and the second barrier 20 closely to each other while being in contact with at least one of the first barrier 10 and the second barrier 20. The cooling ring 30 includes a body 35 and a plating layer 36.

The body 35 is, as shown in FIGS. 7 and 10, a ring element having the shape of a circular arc with a gap 33 and may include at least one of metals such as copper, an copper alloy, aluminum, gold, and silver, whose melting points are relatively low and electrical conductivities are relatively high. The body 35 is formed of copper. In this case, pure copper has heat conductivity of 401 W/m°C, a melting point of 1084°C, and Vickers hardness of 369 Mpa, in which the heat conductivity is relatively high and the Vickers hardness is relatively low.

The plating layer 36, as shown in FIG. 10, is a metallic layer plating the body 35 and includes at least one selected from the group consisting of nickel and chrome. The plating layer 36 contains 99 or more parts by weight of nickel for the total 100 parts by weight, which is close to pure nickel. In this case, pure nickel has heat conductivity of 90.9 W/m°C, a melting point of 1455°C, and hardness of 638 Mpa, and pure chrome has heat conductivity of 93.9 W/m°C, a melting point of 1907°C, and Vickers hardness of 1060 Mpa. Accordingly, in the case of nickel and chrome, heat conductivities thereof are lower than that of copper but melting points and Vickers hardness thereof are higher than those of copper. On the other hand, since electrical conductivity of a metal is proportional to heat conductivity thereof, copper has higher electrical conductivity than nickel and chrome.

Since the cooling ring 30 formed as described above includes the body 35 having the shape of a circular arc including copper and the plating layer 36 formed of nickel plating the body 35, the body 35 formed of copper having relatively lower Vickers hardness and melting point is protected by the plating layer 36 formed of nickel having relatively higher Vickers hardness and melting point. Accordingly, as shown in FIG. 6, although being used for welding the bellows 100, copper powder having high electrical conductivity is not left on an outer circumferential surface of the bellows 100.

Accordingly, when the bellows 100 is used for a semiconductor device, the cooling ring 30 does not cause a defect occurring due to the copper powder in a semiconductor manufacturing process. On the other hand, in the case of the cooling ring 30, although a tiny amount of nickel powder may occur, since the melting point and Vickers hardness of nickel are relatively high and electrical conductivity thereof is relatively low, a defect does not occur in the semiconductor manufacturing process.

Although a metal close to pure nickel is used as the plating layer 36, since containing 99 or more parts by weight of chrome for the total 100 parts by weight, the plating layer 36 may be a metal close to pure chrome.

According to the present invention, the cooling ring 30 is formed as a ring element having the shape of a circular arc including the gap 33 but, as shown in FIG. 8, may include a pair of semicircular elements 31 and 32. When using the pair of semicircular elements 31 and 32, the cooling ring 30 may be separated from the bellows 100 with no deformation and may be reused repetitively.

The cooling ring 30 is formed to have a circular cross-section. However, as shown in FIG. 9, a cooling ring 130 according to an example not being part of the present invention having another cross-section other than a circular shape may be formed. The cooling ring 130 includes a first surface 131 corresponding to a shape of the first barrier 10, a second surface 132 corresponding to a shape of the second barrier 20, an outer circumferential surface 133 connecting outer ends of the first surface 131 and the second surface 132 to each other. Step parts 134 that are depressed are formed on both ends of the outer circumferential surface 133. The cooling ring 130 may easily provide a work space needed while welding the outer circumferential surface welding part OW due to the step parts 134, and a depth of insertion into the interval between the first barrier 10 and the second barrier 20 may be easily controlled by the first surface 131 and the second surface 132.

On the other hand, in FIG. 12, there is shown a cooling ring 230 not being part of the present invention for welding a bellows according to an example not being part of the present invention. The cooling ring 230, different from the cooling ring 30, does not include the plating layer 36 and is formed of a metallic material including at least one selected from the group consisting of tungsten, molybdenum, nickel, and chrome. In this case, pure tungsten has heat conductivity of 173 W/m°C, a melting point of 3420°C, and Vickers hardness of 3430 Mpa, and pure molybdenum has heat conductivity of 138 W/m°C, a melting point of 2623°C, and Vickers hardness of 1530 Mpa. Accordingly, in the case of the tungsten and the molybdenum, the heat conductivities thereof are lower than that of copper but the melting points and the Vickers hardness thereof are very higher than those of copper. All electrical conductivities, the melting points, the Vickers hardness of the tungsten and the molybdenum are relatively higher than those of nickel and chrome. On the contrary, costs of the tungsten and the molybdenum are higher than those of nickel and chrome.

The cooling ring 230 is formed of a metallic material containing 99 or more parts by weight of tungsten for the total 100 parts by weight, which is close to pure tungsten.

Since the cooling ring 230 formed as described above is formed of the metallic material close to pure tungsten having both melting point and Vickers hardness relatively higher than those of copper, nickel, and chrome, although being used for manufacturing a large size of the bellows 100, in which a welding temperature is high and a large amount of welding heat occurs, the cooling ring 230 is not easily melted down and does not leave copper powder.

Also, since the cooling ring 230 uses tungsten having more excellent electrical conductivity than that of nickel used for the cooling ring 30, welding heat occurring during a welding process may be more rapidly dissipated than the cooling ring 30.

The cooling ring 230 is formed of the metallic material close to pure tungsten. However, the cooling ring 230 may be formed of one selected from the group consisting of a metal containing 99 or more parts by weight of molybdenum for the total 100 parts by weight, close to pure molybdenum, a metal containing 99 or more parts by weight of nickel for the total 100 parts by weight, close to pure nickel, and a metal containing 99 or more parts by weight of chrome for the total 100 parts by weight, close to pure chrome.

The cooling ring 230 is formed to have a circular cross-section. However, as shown in FIGS. 9 and 13, a cooling ring 330 according to an example not being part of the present invention having another cross-section other than a circular shape may be formed.

On the other hand, FIG. 14 illustrates a state in which the inner ends of a pair of the first barrier 10 and the second barrier 20 are welded to each other by using the cooling rings 230.

The cooling rings 230 are provided as one pair thereof and are mounted on a first jig 40 and a second jig 50, respectively.

The first jig 40 is a metallic element having a ring shape manufactured by using stainless steel, in which a hollow part 44 is formed in the center and a first mounting part 41, a first space part 42, and a first coupling part 43 are formed on a bottom surface.

The first mounting part 41 is projected downwards along an edge of a bottom end of the hollow part 44, the first space part 42 is a space formed outside the first mounting part 41, and the first coupling part 43 is a groove formed outside the first space part 42.

On a bottom end of the first mounting part 41, one of the cooling rings 230 is mounted.

The first jig 50 is a metallic element having the shape of a circular plate manufactured by using stainless steel, in which a second mounting part 51, a second space part 52, and a second coupling part 53 are formed on a top surface.

The second mounting part 51 is a part on which the other of the cooling rings 230 is mounted, is projected upwards from a top surface of a bottom part 54, and is formed at a location corresponding to the first mounting part 41.

The second space part 52 is a space formed outside the second mounting part 51, is formed in a location corresponding to the first space part 42, and may contain outer ends of the pair of the first barrier 10 and the second barrier 20 in cooperation with the first space part 42.

The second coupling part 53 is a projected part formed outside the second space part 52, which is detachably coupled and fastened to the first coupling part 43.

An inner surface 55 of the second coupling part 53 is formed of a cylindrical circumferential surface having a predetermined diameter to allow outer end parts of the pair of the first barrier 10 and the second barrier 20 to be in contact therewith and supported thereby.

The pair of the first barrier 10 and the second barrier 20 are disposed on a top surface of the second jig 50 as described above, a bottom surface of the first jig 40 is disposed to face the top surface of the second jig 50, and then the first jig 40 and the second jig 50 are attached closely to each other. Then, as shown in FIG. 15, the cooling ring 230 of the first jig 40 is depressed in contact with a top surface of an inner end of the first barrier 10 and the cooling ring 230 of the second jig 50 is depressed in contact with a bottom surface of an inner end of the second barrier 20.

As described above, in a state in which the first barrier 10 and the second barrier 20 are attached closely to each other, when the inner ends of the first barrier 10 and the second barrier 20 are welded to each other through the hollow part 44 of the first jig 40, an inner circumferential surface welding part IW is formed as shown in FIG. 16.

Since the first jig 40 includes the hollow part 44 formed in the center, as shown in FIG. 15, accessibility to the inner ends of the first barrier 10 and the second barrier 20 attached closely to each other is excellent, thereby conveniently welding the inner ends of the first barrier 10 and the second barrier 20.

Also, since the second jig 50 includes the second coupling part 53 including the cylindrical inner surface 55 having the predetermined diameter to allow the outer end parts of the pair of the first barrier 10 and the second barrier 20 to be in contact therewith and supported thereby, the first barrier 10 and the second barrier 20 may be stably fastened to an accurate location with no shake.

Also, since including the first coupling part 43 and the second coupling part 53 coupled and fastened to each other to be detachable, respectively, the first jig 40 and the second jig 50 may be easily coupled with each other at an accurate location with no shake in a coupled state.

While the present invention has been particularly shown and described with reference to exemplary embodiments thereof, it will be understood by those of ordinary skill in the art that various changes in form and details may be made therein without departing from the scope of the present invention as defined by the following claim.

## Claims

1. Use of a cooling ring (30) for welding used to manufacture a bellows (100) comprising a plurality of pairs of barriers (10, 20), each pair being formed of a first barrier (10) and a second barrier (20) disposed to face the first barrier (10), the cooling ring (30) comprising:
a body (35) formed as a circular arc shape, disposed to attach the first barrier (10) and the second barrier (20) closely to each other while being in contact with at least one of the first barrier (10) and the second barrier (20), the body (35) comprising copper;
and being **characterized by**,
a plating layer (36) plating the body (35),
wherein the plating layer (36) comprises at least one selected from the group consisting of nickel and chrome.

## Patentansprüche

1. Verwendung eines Kühlrings (30) zum Schweißen, der zur Herstellung eines Balgs (100) verwendet wird, der eine Mehrzahl von Paaren von Barrieren (10, 20) aufweist, wobei jedes Paar aus einer ersten Barriere (10) und einer zweiten Barriere (20), die angeordnet ist, um der ersten Barriere (10) zugewandt zu sein, gebildet ist, wobei der Kühlring (30) aufweist:
einen Körper (35), der in einer Kreisbogenform ausgebildet und angeordnet ist, um die erste Barriere (10) und die zweite Barriere (20) nahe zueinander zu befestigen, während er mit mindestens einer von der ersten Barriere (10) und der zweiten Barriere (20) in Kontakt ist, wobei der Körper (35) Kupfer umfasst,
und **gekennzeichnet ist durch**,
eine Plattierungsschicht (36), die den Körper (35) plattiert,
wobei die Plattierungsschicht (36) mindestens eines ausgewählt aus der Gruppe bestehend aus Nickel und Chrom umfasst.

## Revendications

1. Utilisation d'un anneau de refroidissement (30) pour soudage utilisé pour fabriquer un soufflet (100) comprenant une pluralité de paires de barrières (10, 20), chaque paire étant formée d'une première barrière (10) et d'une deuxième barrière (20) disposée en regard de la première barrière (10), l'anneau de refroidissement (30) comprenant :
un corps (35) en forme d'arc circulaire, disposé pour attacher la première barrière (10) et la deuxième barrière (20) étroitement l'une à l'autre tout en étant en contact avec au moins l'une de la première barrière (10) et de la deuxième barrière (20), le corps (35) comprenant du cuivre ;
et étant **caractérisée par**,
une couche de placage (36) plaquant le corps (35),
dans laquelle la couche de placage (36) comprend au moins un élément choisi dans le groupe constitué du nickel et du chrome.
